# EUROPÄISCHE PATENTSCHRIFT

(11) **EP 0 553 142 B1**
(45) Veröffentlichungstag und Bekanntmachung des Hinweises auf die Patenterteilung: **17.12.2003**
(21) Anmeldenummer: 91917660.2
(22) Anmeldetag: 08.10.1991
(51) Int. Cl.: C08G 69/42, C08G 69/48, C09J 177/00

(54) **HERSTELLUNG FEUCHTIGKEITSHÄRTBARER, REAKTIVE ALKOXYSILANGRUPPEN ENTHALTENDER POLYAMIDE**
PREPARATION OF MOISTURE-SETTING POLYAMIDES CONTAINING REACTIVE ALKOXYSILANE GROUPS
PREPARATION DE POLYAMIDES AYANT DES GROUPEMENTS REACTIFS D'ALKOXYSILANES, DURCISSABLES A L'HUMIDITE

(30) Priorität: 17.10.1990 DE 4032911
(43) Veröffentlichungstag der Anmeldung: 04.08.1993
(73) Patentinhaber: Henkel Kommanditgesellschaft auf Aktien, 40191 Düsseldorf (DE)
(72) Erfinder: KINZELMANN, Hans-Georg, D-5024 Pulheim 4 (DE); HEUCHER, Reimar, D-5000 Köln 60 (DE); WICHELHAUS, Jürgen, D-5600 Wuppertal (DE)
(86) Internationale Anmeldenummer: EP9101911
(87) Internationale Veröffentlichungsnummer: WO92007020

(56) Entgegenhaltungen:
- DE-A- 3 714 763
- DE-A- 3 917 926
- DE-C- 3 339 981

## Beschreibung

Die Erfindung betrifft die Herstellung feuchtigkeitshärtbarer, reaktive Alkoxysilangruppen enthaltender Polyamide sowie die Verwendung der so hergestellten Polyamide.

Alkoxysilanfunktionalisierte Polyamide, die durch Feuchtigkeit aus dem Substrat und/oder der Umgebung vernetzen, sind dem Fachmann bekannt. Derartige reaktive Polyamide können durch Additionsreaktion eines aminterminierten Polyamids mit einer isocyanathaltigen Alkoxysilanverbindung hergestellt werden. Dies wird z. B. in der DE 33 39 981 sowie in der JP 86/47774 beschrieben. Des weiteren ist bekannt, alkoxysilanfunktionalisierte Polyamide durch Umsetzung NCO-terminierter Polyamide mit Aminoalkylalkoxysilan herzustellen. Derartiges wird beispielsweise durch JP 59/172574, JP 59/172575 sowie in der DE 37 14 763 beschrieben. Nachteilig bei diesen Verfahren ist ein starker Anstieg der Schmelzviskosität, der auf die Ausbildung von Harnstoffgruppen zurückgeführt werden kann. Bei dem erstgenannten Verfahren führen darüberhinaus Überschüsse an freiem Diisocyanat zu einem weiteren, in diesem Fall nicht erwünschten Molekulargewichtsaufbau.

In der DE 33 39 981 werden darüberhinaus NCO-freie Verfahren beschrieben, bei denen aminterminierte Polyamide mit Alkoxysilanverbindungen umgesetzt werden, die zusätzlich jeweils alternativ eine Epoxid-, eine aktivierte Vinyl-, eine aromatische Ester- oder eine Säureanhydridgruppe enthalten. Jedoch weisen auch diese Verfahren einige Nachteile auf. Bei der Umsetzung von aminogruppenhaltigen Polyamiden mit anhydrid- oder epoxidfunktionellen Siloxanen kommt es zu einer unerwünschten Viskositätserhöhung. Bei den anhydridfunktionellen Siloxanen ist dies wahrscheinlich auf die Bildung von Imiden zurückzuführen. Epoxide reagieren mit Aminogruppen unter Bildung einer OH-Gruppe, die ihrerseits wieder mit den Alkoxygruppen des Silans weiterreagieren kann und somit zu einer unerwünschten Vernetzung führt. Bei den mit aromatischen Estern funktionalisierten Alkoxysilanen kann die phenolische Abgangsgruppe anstelle der Alkoxygruppen ins Silan eingebaut werden. Phenoxysilane führen jedoch zu einer nicht erwünschten Verlangsamung der Feuchtigkeitshärtung. Alkoxysilane, die mit aktivierten Phenylgruppen, beispielsweise Methylsäureestergruppen, funktionalisiert sind, lassen sichen durch Michaeladdition mit aminogruppenhaltigen Polyamiden umsetzen. Diese Addition verläuft im allgemeinen mit schlechter Ausbeute und ist in nicht erwünschtem Maße reversibel. Die schlechte Ausbeute ist unter anderem durch die nicht vernachlässigbare Konkurrenzreaktion der Umamidierung zu erklären.

Aufgabe der Erfindung ist es, ein Verfahren zur Herstellung eines alkoxysilanfunktionalisierten Polyamids zur Verfügung zu stellen. Das Polyamid soll nach einem relativ einfachen Verfahren ohne nennenswerte Neben- und/oder Rückreaktionen und vor allem ohne nennenswerte Zunahme der Viskosität hergestellt werden. Dabei sollen die Vorteile bislang bekannter alkoxysilanfunktionalisierter Polyamide erhalten bleiben.

Die Aufgabe wurde durch ein Verfahren gelöst, das dadurch gekennzeichnet ist, daß estergruppenterminierte Polyamide mit einem aminoterminierten Alkoxysilan des Typs Formel 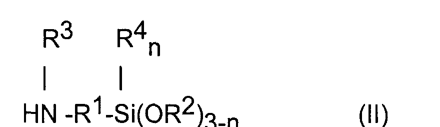 umgesetzt wird,
wobei n = 0, 1 oder 2
R¹ und R⁴ = Kohlenwasserstoffreste,
R³ ein Wasserstoff und
R² = eine Alkylgruppe sind.
Die Kohlenwasserstoffe gemäß R¹ und R⁴ können z.B. lineare, verzweigte und/oder cyclische Aliphaten sowie aromatische Verbindungen sein.

Dabei ist R¹ vorzugsweise eine (CH₂)ₙ-Gruppe mit Werten für n von 1 bis 20, insbesondere von 2 bis 5. Beste Ergebnisse werden erzielt, wenn n = 3 ist. Vorzugsweise sind R² und R⁴ jeweils voneinander unabhängige Alkylgruppen. Vorzugsweise sind diese Alkylgruppen linear, insbesondere wenn sie eine Kohlenstoffanzahl von 1 bis 5 aufweisen. Bevorzugt ist eine Kohlenstoffanzahl von 1 bis 2. Besonders geeignet sind Verbindungen, bei denen n den Wert 0 oder 1 annimmt. Vorzugsweise sind 3 Substituenten am Silizium über Sauerstoff an dieses gebunden, so daß n den Wert 0 annimmt.

Darüberhinaus ist es bevorzugt, daß die Alkoxysilangruppen der erfindungsgemäß hergestellten Polyamide terminal angeordnet sind. Dadurch wird sichergestellt, daß die Polyamide nach der Aushärtung optimale anwendungstechnische Eigenschaften besitzen. Dabei erweist es sich als besonders günstig, wenn das Molekulargewicht (Zahlenmittel aus Kennzahlen) der Polyamide im Bereich von 2 000 bis 30 000, insbesondere im Bereich von 5 000 bis 20 000 liegt. Je nach Verwendungszweck der Polyamide kann innerhalb des genannten Rahmens ein noch enger zu fassender Molekulargewichtsbereich bevorzugt sein. So liegen beispielsweise Schmelzklebstoffe vorzugsweise im oberen Molekulargewichtsbereich des genannten Rahmens.

Ausgangsmaterial zur erfindungsgemäßen Herstellung der Polyamide können Säure- oder Aminogruppen enthaltende Polyamide sein. Diese Polyamide können Homopolyamide, Copolyamide, Polyamidlegierungen, sogenannte elastomere Polyamide sowie Polyamide mit einem Gehalt an anderen Thermoplasten sein. Es können also folgende Grundtypen eingesetzt werden:
- aliphatische Homo- oder Copolyamide,
- aliphatisch-aromatische Homo- oder Copolyamide,
- amorphe Polyamide,
- elastomere Polyamide,
- Mischungen verschiedener Polyamide oder
- Polyamidlegierungen, welche mindestens 50 Gew.-% Polyamide enthalten sollten.

Geeignete aliphatische Polyamide leiten sich z. B. von Aminosäuren, Lactamen oder aliphatischen Carbonsäuren der Formel HOOC-(CH₂)ₙ-COOH mit Diaminen der allgemeinen Formel H₂N-(CH₂)ₙ-NH₂ ab, wobei n vorzugsweise 4 bis 13 bedeutet. Von diesen aliphatischen Dicarbonsäuren lassen sich beispielsweise Adipinsäure, Betamethyladipinsäure, Pimelinsäure, Korksäure, Acelainsäure, Sebacinsäure, Nonandicarbonsäure, Decandicarbonsäure, Dodecandicarbonsäure, n-Dodecenylbernsteinsäure, Isododecenylbernsteinsäure, Isododecylbernsteinsäure, Isooctylbernsteinsäure, n-Octylbernsteinsäure sowie deren Säureanhydride einsetzen. Geeignet können auch carboxylterminierte flüssige Kautschuke sein wie z. B. carboxylterminiertes 1,2-Butadien oder carboxylterminiertes Hydro-1,2-Polybutadien sowie des weiteren aromatische Dicarbonsäuren wie Isophthalsäure.

Als Beispiele für die Diamine, die zur Synthese der Polyamidharze entsprechend der vorliegenden Erfindung verwendet werden, lassen sich beispielhaft anführen Ethylendiamin, Propylendiamin, 1,2-Diaminopropan, Tetramethylendiamin, Piperacin, Pentamethylendiamin, Hexymethylendiamin, 1,7-Diaminoheptan, 1,8-Diaminooctan, 1,9-Diaminononan, 1,10-Diaminodekan oder auch beidseitig aminoterminiertes Polyethylenglykoldiamin mit einem bevorzugten Molekulargewicht von 300 bis 2 000. Ferner können auch Lactame mit einer Kohlenstoffzahl von vorzugsweise 6 bis 12, z. B. ε-Caprolactam, w-Lauryllactam oder deren w-Aminosäure verwendet werden.

Geeignete elastomere Polyamide können aus Polyamid- und Polyetherblöcken zusammengesetzt sein, wobei die Polyamid- und die Polyetherblöcke z. B. durch Ester- oder Aminbindungen oder unter Verwendung eines Diepoxids verknüpft sein können. Amorphe Polyamide sollten vorzugsweise eine Glasumwandlungstemperatur unter 200 °C aufweisen.

Die Copolyamide können beispielsweise aus aliphatischen, aromatischen und/oder verzweigtkettigen Monomeren sowie aus Monomeren mit zusätzlichen Heteroatomen, welche keine polyamidbildende Funktion ausüben, aufgebaut sein. Die als Ausgangsstoff zu verwendenden Polyamide können freie Aminound/oder Carboxylgruppen enthalten. Sie können auch polyamidbildungsinerte Endgruppen, sowie in der Kette neben aliphatischen Kettengliedern und Amidgruppen noch sekundäre Aminogruppen sowie andere Gruppen mit Heteroatomen wie -0-, -S-, -SO₂-, -NCH₃- oder -CO- enthalten.

Für die Herstellung der erfindungsgemäßen Polyamide sind insbesondere die folgenden (Co)Polyamide (PA) geeignet: PA-6, PA-11, PA-12, PA-66, PA-69, PA-6.10, PA-6.12, PA-6.13, amorphes PA gemäß US-B-4 233 145 oder US-B-4 268 661, amorphes PA aus Isophthalsäure, Hexandiamin und ggf. anderen Polyamidmonomeren, transparentes Polyamid aus Trimethylhexamethylendiamin und Terephthalsäure, weitere bekannte transparente Polyamide, elastomere Polyamide mit einem kristallinen Polyamidanteil aus z. B. PA-6, PA-11 oder PA-12, welche z. B. über Amid- oder Esterverbindungen mit einem Polyetherblock verknüpft sein können, wobei der Polyetherblock bevorzugt die Struktur -(0-(CH₂)₄-)ₙ mit bevorzugt n = 2 bis 50 aufweist oder wobei die Sauerstoffatome durch Isopropylgruppen verknüpft sind.

Bevorzugt sind Polyamide auf Basis von Dimerfettsäure. Derartige Polyamide sind dem Fachmann beispielsweise aus den Offenlegungsschriften DE 35 31 941, DE 35 35 732 und DE 37 23 941 bekannt . Dabei sind solche Polyamide bevorzugt, bei denen das Polyamidgrundgerüst zumindest überwiegend auf der genannten Dimerfettsäure als Säurekomponente aufbaut. Bevorzugt werden hier Polyamide, denen technische Dimerfettsäure als Ausgangsprodukt zugrundeliegt, die außer Dimerfettsäure noch einen untergeordneten Gehalt an Trimerfettsäure enthält. Dadurch wird bei der Aushärtung eine in beschränkten Maßen erwünschte dreidimensionale Vernetzung erreicht.

Setzt man bei der Herstellung der Polyamide Dicarbonsäure im Überschuß ein, so erhält man carboxylgruppenhaltige Polyamide, setzt man Diamine im Überschuß ein, so erhält man carboxylgruppenhaltige Polyamide, setzt man Diamine im Überschuß ein, so erhält man aminogruppenhaltige Polyamide, vgl. Houben-Weyl, Band 14/2, Thieme-Verlag sowie Ullmanns Enzyklopädie der technischen Chemie, Band 19, Verlag Chemie 1980. Bevorzugt werden Polyamide zur Herstellung der erfindungsgemäßen Polyamide eingesetzt, die auf den genannten Dimer- und Fettsäuren beruhen, welche ihrerseits durch Dimerisation ungesättigter Fettsäuren mit 12 bis 22 Kohlenstoffatomen bzw. den Estern derselben hergestellt wurden. Dies sind Polyamide, wie sie in der EP-A-0 061 119 beschrieben sind, deren Offenbarung hier eingeschlossen wird.

Bei dem erfindungsgemäßen Verfahren kann - bevorzugt in einem Eintopfverfahren - zunächst das esterterminierte Polyamid aus einem Diamin und Überschuß an Dicarbonsäure und/oder Dicarbonsäurediester hergestellt und im Anschluß daran mit einer Verbindung der allgemeinen Formel (II) zu einem erfindungsgemäßen Polyamid umgesetzt werden. Dabei kann die Aminkomponente ein niedermolekulares Diamin mit einem Molekulargewicht bis 600, ein aminterminiertes Polyamidprepolymer mit einem bevorzugten Molekulargewichtsbereich von 1 500 bis 5 000 oder ein aminterminiertes Polyamid mit einem Molekulargewicht bis zu 30 000 sein. Dies hängt davon ab, welche Eigenschaften dem Endprodukt zukommen sollen, was wiederum durch die Einsatzzwecke bestimmt ist.

Die durch das erfindungsgemäße Verfahren synthetisierten reaktiven Polyamide zeichnen sich durch besonders niedrige Schmelzviskositäten aus und vernetzen mit Feuchtigkeit in bekannter Weise. Derartige Polyamide finden Verwendung als Dichtstoffe, Schmelzklebstoffe und Vergußmassen. Bevorzugt ist der Einsatz als Schmelzklebstoff. Bei der Verwendung können die Polyamide auch als sogenannte Legierung oder Blends eingesetzt werden. Insbesondere können sie dabei mit nicht reaktiven Thermoplasten, insbesondere nicht reaktiven Polyamiden gemischt werden. Den reaktiven Polyamiden können entsprechend ihrer Verwendung ein zur Beschleunigung der Hydrolysereaktion Zinn- oder Titanorganische Verbindungen, insbesondere 0,01 bis 3 Gew.-% hinzugesetzt werden. Derartige Verbindungen sind beispielsweise Zinncaprylat, Dibutylzinndilaurat (DBTL), Dioctylzinnmaleat und Dioctylzinnoxid oder Tetra-1-propoxititan und Tetra-n-butoxititan. Derartige Katalysatoren sind dem Fachmann bekannt, z. B. aus dem genannten Ullmann, Band 21, Seite 523 ff oder aus E. Skeist, Handbook of Adhesives, van Nostrand, 1976, Seite 630.

Den reaktiven Polyamiden können erforderlichenfalls auch Füllstoffe und andere Additive wie Antioxidantien zugesetzt werden. Ihnen können bis zu 50 Gew.-% bezogen auf Polyamid gegenüber diesem Inerterharze und Weichmacher zugefügt werden. Diese Harze und Weichmacher sind ebenfalls dem Fachmann bekannt, z. B. aus dem genannten Handbook of Adhesives. Aufgrund der niedrigen Schmelzviskosität der Polyamide kann es jedoch bevorzugt sein, auf Weichmacher gänzlich zu verzichten. Die niedrige Schmelzviskosität erweist sich als günstig bei der Applikation der Polyamide. Sie sind leicht verarbeitbar, führen zu guter Benetzung der Substrate, können bei relativ niedrigen Auftragstemperaturen appliziert werden und sind daher in besonderem Maße für temperaturempfindliche Substrate geeignet. Im folgenden werden einige bevorzugte Anwendungen der feuchtigkeitshärtbaren Polyamide dargestellt.

Die erfindungsgemäß hergestellten Polyamide eignen sich hervorragend zum Verguß von Elektro- und/oder Elektronikbauteilen bzw. entsprechenden Stecksystemen sowie zur Verklebung von Ölfiltern. Durch den verstärkten Einsatz von elektronischen Bauteilen z.B. im Automobilbau werden heute hohe Anforderungen an Steckverbinder und Kabelbäume gestellt. Es gibt Anwendungsbereiche für elektronische Bauteile, z.B. im Auto und hier besonders im Motorraum, bei denen diese extremen Bedingungen wie Hitze, Frost, Staub, Öl und insbesondere Spritzwasser ausgesetzt sind. Diese Faktoren können die Funktionsfähigkeit der elektronischen Bauteile beeinträchtigen oder unterbinden. Besonders das Eindringen von Feuchtigkeit in die betreffenden Steckverbinder oder Kabelbäume ist bis heute ein nur kostenintensiv und technisch aufwendig zu lösendes Problem. Hier gewährleisten die Polyamide einen optimalen Schutz der betreffenden Elektronikbauteile, da sich mit ihnen z.B. völlig wasserdichte Steckverbindungen herstellen lassen. Auch die heute üblicherweise geforderte Wärmestandfestigkeit derartige Vergußmassen bzw. Steckverbindungen von etwa 150 °C wird durch die erfindungsgemäß hergestellten Polyamide mit über 200 °C bei weitem übertroffen. Darüber hinaus zeichnen sich die Polyamide durch ein sehr gutes Tieftemperaturverhalten (< - 30 °C) und sehr gute Haftung auf unterschiedlichen Materialien für Steckergehäuse aus.

Des weiteren eignen sich die erfindungsgemäß hergestellten Polyamide hervorragend zur Herstellung von Formteilen, insbesondere Kabelbaumabdichtungen. Hierunter werden spezielle Formteile verstanden, die auf einen Kabelmantel gespritzt werden, dort ihre Klebkraft entfalten und durch Nachvernetzung ihre hohen Wärmestandfestigkeiten erreichen. Durch diese hohe Wärmestandfestigkeit lassen sich auch Gegenstände in unmittelbarer Nähe von Wärmequellen fixieren wie z.B. Kabel in Nähe von Verbrennungsmotoren.

Die erfindungsgemäß hergestellten Polyamide eignen sich bestens zur Herstellung von Kabelmanteln, insbesondere wenn an diese hohe Anforderungen wie Wasserdichtigkeit gestellt werden. Dieser Vorteil wird durch die Verklebbarkeit der Polyamide erreicht und stellt eine deutliche Verbesserung gegenüber den bisher eingesetzten Systemen wie z.B. Teflon^{R} dar.

Des weiteren können die erfindungsgemäß hergestellten Polyamide als Beschichtung oder Formulierungsbestandteil für wärmeschrumpfende Bauteile verwendet werden. Diese Bauteile bestehen z.B. aus vernetzten Polyolefinen und werden in aufgeweiteter Form als Extrusions- und Formteile wie z.B. Kappenschläuche und Manschetten hergestellt. Sie dienen zum druck- und feuchtigkeitsdichten Verschließen von Kabeln aller Art und Durchmesser. Auf der Innenseite können sie mit den Polyamiden beschichtet werden. Beim Erwärmen mit offener Gasflamme schrumpfen die Bauteile bis auf ein bestimmtes Maß zurück und das Polyamid preßt sich an alle Unebenheiten des Kabelmantels an. Der Einsatzbereich der Polyamide umfaßt insbesondere Verbindungs-, Abzweigungs- und Aufteilungsschrumpfmuffen sowie Schrumpfendkappen und Schrumpfschläuche z.B. in modernen Nachrichtenkabelanlagen als auch das Verbindungen von Energiekabeln oder den Korrosionsschutz von Gas- und Wasserrohren.

Die erfindungsgemäß hergestellten Polyamide sind auch hervorragend bei der Herstellung von Schichtenmantelkabeln zu verwenden. Dabei ist es Stand der Technik mit Schmelzklebstoffen z.B. Energiekabel mit Längsnaht-verklebten Aluminium- und Kupferbändern herzustellen. Diese Konstruktion verhindert das Vordringen von Feuchtigkeit in das Kabelinnere und hat gleichzeitig eine elektrische Abschirmfunktion. Da neben der guten Klebfestigkeit und einem problemlosen Einfügen in einen vollautomatischen Fertigungsprozeß besondere Anforderungen an die Beständigkeit gegen die im Betrieb der Kabel auftretende Dauertemperaturbelastung der Verklebung gestellt werden, eignen sich die Polyamide besonders für diesen Einsatzzweck. Ein weiteres bevorzugtes Einsatzgebiet ist z.B. die Herstellung von Lichtwellenleitern. Hierbei wird zur Sicherung gegen eindringende Feuchtigkweit die mit einer hochfesten Faserarmierung umgebene Kabelseele mit dem Schichtenmantel dauerhaft verbunden. Durch den kraftschlüssigen Verbund mittels der Polyamide zwischen dem Zugentlastungselement und der Kabelmantelkonstruktion wird zusätzlich eine hohe mechanische Stabilität erzielt.

Des weiteren eignen sich die erfindungsgemäß hergestellten Polyamide als Werkstoff zur Herstellung von Vliesen, die z.B. bei Förderbändern eingesetzt werden. Derartige Vliese müssen sehr hohe mechanische und thermische Anforderungen erfüllen und zudem hydrolysestabil sein. Neben diesen Eigenschaften zeichnen sich Vliese aus den Polyamiden zusätzlich durch hohe Flexibilitäten aus.

Die erfindungsgemäß hergestellten Polyamide eignen sich in hervorragender Weise zum Verbinden verschiedener Materialien mit Kunststoffen oder zur Verbindung von Kunststoffen untereinander. Ein bevorzugter Einsatzbereich ist hier die Automobilherstellung. Nicht nur zu Kunststoffen sondern auch zu Glas zeigen die Polyamide eine sehr gute Haftung, so daß ein bevorzugter Anwendungsbereich die Verklebung von Glas mit Kunststoffen ist, z.B. Scheinwerferverklebungen im Automobilbereich.

Außerdem eignen sich die feuchtigkeitshärtenden Polyamide als Reparaturset für Röhrensysteme, insbesondere Kanalisation. Dabei wird ein Reparaturschlauch in das Röhrensystem eingeführt. Derartige Reparatursysteme gehören zum Stand der Technik und werden kommerziell vertrieben wie z.B. das Inpipe^{R}-System der gleichnamigen Firma. Bei einem derartigen Reparatursystem eignen sich die erfindungsgemäß hergestellten Polyamide sowohl als Material für den Reparaturschlauch, als auch und insbesondere zur Verklebung des Schlauches.

Die vorliegende Erfindung soll durch die folgenden Beispiele näher erläutert werden.

### Beispiele

### Vergleichsbeispiel 1

Ein Polyamid (1) mit einem Zahlenmittel von 11720 g/mol (Viskosität = 4400 mPas bei 175 °C) wurde bei 180 °C aufgeschmolzen und mit 2 Äquivalenten 3-Isocyanatopropyltriethoxysilan umgesetzt. Nach 30 min Reaktionszeit wurden 1 Gew.-% Dibutylzinndilaurat (DBTL) zugegeben und das Produkt abgefüllt.

### Vergleichsbeispiel 2

Die Prozedur von Vergleichsbeispiel 1 wurde mit 2 Äquivalenten eines 1 : 1-Adduktes aus Isophorondiisocyanat und 3-Aminopropylmethyldiethoxysilan anstelle von 3-Isocyantopropyltriethoxysilan wiederholt.

### Beispiel 1

Polyamid (1) wurde bei 230 °C mit 4 Äquivalenten Adipinsäuredimethylester 6 h umgesetzt bis eine minimale Aminzahl erreicht wurde. Der Überschuß des Esters wurde im Hochvakuum abdestilliert und der Rückstand bei 200 °C mit 2 Äquivalenten 3-Aminopropyltrimethoxysilan innerhalb von 2 h umgesetzt. Nach Zugabe von 0,5 Gew.-% DBTL wurde das Produkt abgefüllt.

### Beispiel 2

Ein Polyamid (2) mit einem Zahlenmittel von 14 500 g/mol wurde bei 200 - 230 °C in 6 h mit 4 Äquivalenten Azelainsäuredimethylester umgesetzt. Nach Zugabe von 6 Äquivalenten 3-Aminopropyltrimethoxysilan ließ man noch 2 h bei 180 °C rühren, gab 0,5 Gew.-% DBTL hinzu und füllte ab.

### Beispiel 3a

3 Äquivalenten eines Polyamid-Prepolymeren auf Basis destillierter Dimerfettsäure und 1,6-Hexamethylendiamin (Zahlenmittel 1 400), das zuvor nach bekannten Methoden synthetisiert wurde, und 4 Äquivalente Azelainsäuredimethylester wurden 4 h bei 180 °C umgesetzt. Nach Erreichen einer minimalen Aminzahl wurde eine kleine Menge zur Charakterisierung isoliert und die Restmenge in Beispiel 3b eingesetzt.

### Beispiel 3b

Das esterterminierte Polyamid aus Beispiel 3a wurde mit 2 Äquivalenten 3-Aminopropyltrimethoxysilan innerhalb von 2 h bei 180 °C zur Reaktion gebracht und nach Zugabe von 0,5 Gew.-% DBTL abgefüllt.

### Beispiel 4

Analog Beispiel 3b mit 2 Äquivalenten 3-Aminopropyltriethoxysilan.

### Prüfergebnisse (Tabelle 1):

Die Bestimmung der Schmelzviskosität (n) erfolgte mit einem I.C.I. Kegel-Platte-Viskosimeter (Research Equipment Ltd.).

Reißfestiakeit (FR) und Reißdehnung (RD) wurden an S2-Normstäben nach DIN 53 504 durchgeführt.

Die Prüfung der Zugscherfestigkeit (ZSF) erfolgte bei Raumtemperatur an Buchenholzprüfkörpern der Dimension 100 mm x 25 mm x 3,7 mm, die 10 mm überlappend verklebt wurden. Die Prüfzuggeschwindigkeit betrug 15 mm/min.

Die Messung der Wärmestandfestigkeit erfolgte an 25 mm überlappend verklebten Buchenholzprüfkörpern (Dimension siehe ZSF), die mit 0,02 N/mm² belastet wurden. In einem Trockenschrank werden diese Prüflinge mit 0,5 °C/min auf max. 200 °C erwärmt. Als Wärmestandfestigkeit wurde die Temperatur bezeichnet, bei der die Verklebung gerade noch hält.

**Tabelle 1**

| | n [mPas] (Temp.) | RF [MPa] | RD [%] | ZSF [MPa] |
|---|---|---|---|---|
| Vergl.-bsp. 1 | 13 800 (175) | 1,4₁ₕ | 810 | n.b. |
| | | 4,8_{28d} | 590 | n.b. |
| | | | | |
| Vergl.-bsp. 2 | 18 200 (175) | --------------n.b.-------------- | | |
| | | | | |
| Bsp. 1 | 4 200 (175) | 1,0₁ₕ | 500 | 1,0 |
| | | 1,6_{5d} | 470 | 2,0 |
| | | | | |
| Bsp. 2. | 3 300 (150) | 1,2₃₀ₘᵢₙ | 120 | 2,7 |
| | | 3,7_{7d} | 270 | 5,4 |
| | | | | |
| Bsp. 3a | 3 300 (150) | 10,4 | 17 | 6,6 |
| Bsp. 3b | 3 600 (150) | 10,4₁ₕ | 40 | 10,1 |
| | | 15,3_{7d} | 50 | 16,2 |
| | | | | |
| Bsp. 4 | 3 200 (150) | 10,9₁₂ₕ | 30 | 4,7 |
| | | 15,8_{7d} | 45 | 10,1 |
| n.b. = nicht bestimmt, Temperatur in °C | | | | |

Die in den Werten in der Spalte RF zugeordneten tiefgestellten Indizes geben Auskunft über den Zeitraum zwischen der Ausführung der Verklebung und des Tests

Alle reaktiven Polyamide zeigen spätestens nach 7 Tagen Wärmestandfestigkeiten von größer 200 °C.

Polyamid (1) : Macromelt^{R} 6797, Henkel

Polyamid (2) : Macromelt^{R} 6207, Henkel

## Patentansprüche

1. Verfahren zur Herstellung feuchtigkeitshärtbarer, reaktive Alkoxysilangruppen enthaltender Polyamide, **dadurch gekennzeichnet, daß** estergruppenterminierte Polyamide mit einem aminoterminierten Alkoxysilan des Typs 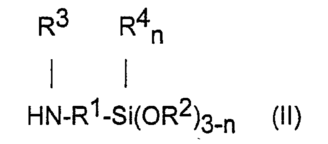 umgesetzt werden,
wobei n = 0, 1 oder 2
R¹ und R⁴ = Kohlenwasserstoffreste,
R³ ein Wasserstoff und
R² = eine Alkylgruppe sind.

2. Verfahren nach Anspruch 1, **dadurch gekennzeichnet, daß** das Verfahren als zweistufige Eintopfreaktion durchgeführt wird.

3. Verwendung der feuchtigkeitshärtenden, reaktive Alkoxysilangruppen enthaltenden Polyamide gemäß mindestens einem der Ansprüche 1 oder 2 als Dichtstoffe, Schmelzklebtoffe und/oder Vergußmassen, insbesondere als Schmelzklebstoffe.

4. Verwendung der feuchtigkeitshärtbaren, reaktive Alkoxysilangruppen enthaltenden Polyamide gemäß mindestens einem der Ansprüche 1 oder 2 zum Verguß von Elektro- und/oder Elektronikbauteilen, zur Herstellung von Formteilen, zur Fixierung von Substraten in Nähe von Wärmequellen, zur Verklebung von Ölfiltern, zur Herstellung von Kabelmanteln, zur Herstellung von Schichtmantelkabeln, als Beschichtung oder Formulierungsbestandteile für wärmeschrumpfende Bauteile, zur Verklebung von Kunststoffen und/oder Glas mit sich selbst oder anderen Materialien, zur Herstellung von hochbelastbaren Vliesen sowie als Reparaturset für Röhrensysteme.

## Claims

1. A process for producing a moisture-curing polyamide containing reactive alkoxysilane groups, **characterized in that** ester terminated polyamides are reacted with an aminoterminated alkoxysilane of the following type: 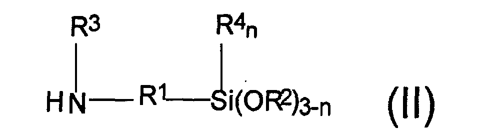 in which
n = 0, 1 or 2,
R¹ and R⁴ represent hydrocarbon radicals,
R³ is a hydrogen atom and
R² is an alkyl group.

2. A process according to claim 1 **characterized in that** the process is carried out as a two step one-pot reaction.

3. The use of moisture curing, polyamides containing reactive alkoxysilane groups according to at least one of the claims 1 or 2 as sealing compounds, hot melt adhesives and / or encapsulating compounds, more particularly as hot melt adhesives.

4. The use of moisture curing polyamides containing reactive alkoxysilane groups according to at least one of the claims 1 or 2 for the encapsulation of electrical and/or electronic components, for the production of mouldings, for fixing substrates in the vicinity of heat sources, for bonding oil filters, for the production cable sheaths, for the production of multi-layer sheathed cables, as coating or formulation constituents for heat-shrinking components, for bonding of plastics and / or glass to the same materials or to different materials, for the production of high strength mats and as repair kit for pipe systems.

## Revendications

1. Procédé de production de polyamides qui renferment des groupes alkoxysilane réactifs, durcissables à l'humidité
**caractérisé en ce que**
des polyamides terminés par des groupes ester sont mises à réagir avec un alkoxysilane terminé par un amino du type 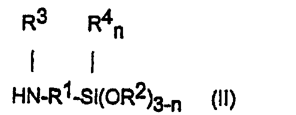 dans laquelle n = 0, 1 ou 2
R¹ et R⁴ = restes d'hydrocarbure
R³ est un hydrogène et
R² est un groupe alkyle.

2. Procédé selon la revendication 1,
**caractérisé en ce que**
le procédé est effectué comme réaction à deux étapes en un seul pot.

3. Utilisation des polyamides contenant des groupes alkoxysilane réactifs, durcissant a l'humidité conformément à au moins une des revendications 1 ou 2, comme substances d'étanchéité, adhésifs par fusion et/ou masse de coulée, en particulier comme adhésifs par fusion.

4. Utilisation des polyamides contenant des groupes alkoxysilane réactifs, durcissables à l'humidité, conformément à au moins une des revendications 1 ou 2,
en vue de la coulée d'éléments de construction électriques et/ou électroniques pour la préparation des pièces moulées, pour la fixation de substrats à proximité de sources de chaleur, pour l'encollage de filtres à l'huile, pour la production d'enveloppes de câble, pour la préparation de câbles d'enveloppe en couche, comme revêtement ou constituants de formulation pour des éléments de construction qui rétrécissent à la chaleur, pour l'enveloppe de matières plastiques et/ou de verre avec eux mêmes ou avec d'autres matériaux, pour la production de non-tissés qui peuvent être soumis à des contraintes élevées ainsi que comme jeu de réparation pour des systèmes de tubes.
